# EUROPEAN PATENT APPLICATION

(11) **EP 1 622 389 A2**
(43) Date of publication of application: **01.02.2006**
(21) Application number: 05105964.0
(22) Date of filing: 30.06.2005
(51) Int. Cl.: H04N 7/26, H04N 7/36

(54) **Adaptive coding method and device**

(30) Priority: 06.07.2004 FR 0451446
(71) Applicant: Thomson Licensing, 92100 Boulogne Billancourt (FR)
(72) Inventor: Olivier, Yannick, 35235 Thorigne Fouillard (FR); Francois, Edouard, 35890 Bourg des Comptes (FR); Ruellou, Pierre, 35410 Domloup (FR)
(74) Representative: Ruellan-Lemonnier, Brigitte

(57) **Abstract**

The method containing a pre-analysis phase (6) with pel-recursive type motion estimation and an actual coding phase with block matching motion estimation (11) for picture blocks constituted by one or more sub-blocks, characterised in that the coding phase also comprises
- a motion vector selection stage for the picture sub-blocks based on the motion vectors calculated by matching for the block containing the sub-block and based on the motion vectors calculated by the pel-recursive type estimation for the pixels or the pixel groups belonging to the sub-block,
- and a calculation stage of the best partition of a picture block into sub-blocks based on the correlation calculations taking into account the motion vectors selected from the sub-blocks constituting a block.

## Description

The invention relates to a method or device for coding a sequence of source pictures, more specifically a method comprising a pel-recursive motion estimation type pre-analysis phase and a specific coding phase with block matching motion estimation.

The domain is video compression. We are particularly interested in MPEG4 standard compatible coding circuits.

"Block matching" type motion estimation is implemented in an encoder, to use the temporal correlation of the pictures in a sequence of pictures. It calculates pre-selected blocks subtracted from a current block for coding in inter mode. Owing to the different choices in the coding parameters proposed by the standards, for example the size of the picture block for motion estimation, the reference picture or the pictures from which motion estimations are made, the upper field, the lower field or the frame for these reference pictures etc., a selection being then made according to criteria such as coding cost, a significant amount of motion calculations must be realised by the encoder. These calculations are costly in terms of time and processing capacity. The motion estimators must be specific to the encoder or at least be compatible to the multitude of choices proposed in the standard and implemented by the encoder.

For example in the case of a "block-matching" type hierarchical motion estimator for an encoder compatible with the H264 or MPEG4 part 10 standard, a motion vector field is calculated for each block size (4x4, 4x8, 8x4, 8x8, 8x16, 16x8, 16x16) and for each reference picture. For coding by monoblock pair, known as MBAFF, the English acronym for MacroBlock Adaptive Frame Field, the estimator provides, per macroblock, 1 motion vector field for the frame, 2 motion vector fields for the fields. Hence, for 16x16 size macroblocks, 41 x 3 motion vectors may be calculated for each reference picture, this number being multiplied if several reference pictures are used, such as in multi-reference mode.

Another problem concerns the use itself of a hierarchical type motion estimator. Though this type of estimator provides a more uniform motion field, one cannot easily lock onto small object motions, due to the low resolution/high resolution approach.

The invention aims to overcome the disadvantages described above.

For this purpose, one of the objects of the invention is a method for coding a sequence of source pictures containing a pre-analysis phase with pel-recursive type motion estimation and an actual coding phase with a block matching motion estimation stage for picture blocks constituted by one or more sub-blocks, characterised in that the coding phase also comprises
- a motion vector selection stage for the picture sub-blocks based on the motion vectors calculated by matching for the block containing the sub-block and based on the motion vectors calculated by the pel-recursive type estimation for the pixels or the pixel groups belonging to the sub-block,
- and a calculation stage of the best partition of a picture block into sub-blocks based on the correlation calculations taking into account the motion vectors selected from the sub-blocks constituting a block.

According to a particular implementation, the method is characterised in that the selection stage calculates the correlation levels of the sub-blocks for the pel-recursive type motion vectors corresponding to these sub-blocks, the motion vectors obtained by block matching being selected automatically.

According to a particular implementation, the size of the picture blocks is that defined in the MPEG2 standard and the sizes of its sub-blocks are those available in the MPEG 4 standard.

According to a particular implementation, the block matching motion estimation is of the hierarchical type.

According to a particular implementation, the pre-analysis phase comprises a pel-recursive type motion estimation stage between the current picture and the previous picture, for the same resolution or for a lower resolution and a noise reduction stage by motion-compensated filtering based on pel-recursive type motion estimation.

According to a particular implementation, the pre-analysis phase also performs correlation calculations for the different fields of the current picture to determine, for each block to be coded and for a reference picture, the corresponding field or frame to use according to the best correlation and transmits this information to the block matching motion estimation circuit to implement this estimation on the corresponding reference picture.

The invention also concerns a coding device containing a pre-analysis circuit with a pel-recursive type motion estimator and an actual coding circuit by picture sub-blocks, with a picture block matching motion estimator constituted by one or more sub-blocks, characterized in that the coding circuit also contains a coding mode decision circuit
- for the selection of motion vectors for the picture sub-blocks based on the motion vectors calculated by the block motion estimator and in relation to the block containing the sub-block and based on the motion vectors calculated by the pel-recursive type estimation for the pixels or the pixel groups belonging to the sub-block,
- and for the calculation of the best partition of a picture block into sub-blocks based on the correlation calculations taking into account the motion vectors selected from the sub-blocks constituting a block.

The combination of a block matching motion estimator, well adapted to data compression, and a pel-recursive type motion estimator, well adapted to physical motion calculation enables a motion field of good quality and a good compression rate to be obtained. The calculations are reduced.

Owing to the combination of the motion vector fields of these estimators, it is for example easier to lock onto small objects moving in the picture, which would have been ignored by the motion estimator of the "block matching" type. By using the information relative to the motion vectors representing the physical field, the "block matching" type motion estimator, hierarchical for example, may initialise a motion search on such vectors by using them as predictors.

It is also possible to use a "block matching" type estimation circuit designed for picture blocks larger than sub-macroblocks, a standard MPEG2 type estimator for example, and thus less expensive. The correlation or coding cost calculation for predictive modes, for smaller sub-macroblocks is thus implemented from the motion vector fields provided by the pel-recursive type motion estimator and the "block matching" type motion estimation circuit mentioned, for example by combining or by selecting the vectors.

Another advantage consists in using the information from the pel-recursive motion estimator, by the hierarchical motion estimator, to restrict its calculations, for example by selecting the reference pictures, fields or frames to use.

Other specific features and advantages will emerge clearly from the description, the description provided as a non-restrictive example and referring to the annexed drawings wherein:
- figure 1, a block diagram of an encoder according to the invention,
- figure 2, the partitions of a macroblock and sub-macroblock,
- figure 3, a coding mode decision algorithm.

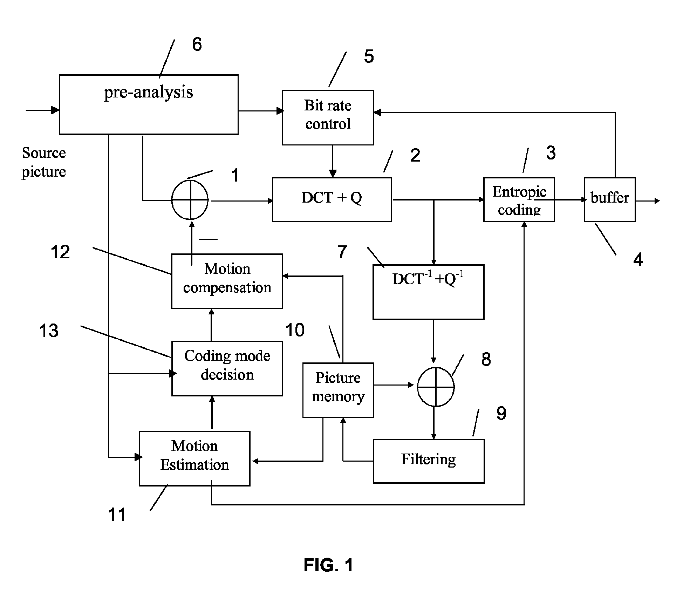

Figure 1 represents an encoder of a video sequence, according to the invention.

The digital video data of the source picture is received at the input of the encoder to be transmitted to a pre-analysis circuit 6. The pictures are filtered and transmitted, by picture block, to a first input of a subtractor 1. According to the coding mode, intra or inter, the subtractor 1 transmits the information relating to the current block received on its first input or subtracts from the latter the latest information corresponding to a predicted block available on its second input. The outgoing data of the subtractor is transmitted to a discreet cosine and quantization transformation circuit 2. The quantized outgoing coefficients of this circuit undergo entropic coding through the entropic encoder 3 then are memorized in a buffer memory 4. The filling level of this memory is transmitted to a bit rate control circuit 5, which also receives data from the pre-analysis circuit, and which affects the quantization step of the quantizer 2.

The current picture is reconstructed to provide the predicted blocks. Hence, the quantized coefficients undergo an inverse quantization and an inverse discreet cosine transformation through the referenced circuit 7 to give the decoded luminance values.

The adder 8 enables the predicted block to be added to the decoded coefficient block, if it is coded in inter mode. The reconstructed block is filtered by the filtering circuit 9 before being memorized in the picture memory 10 that memorizes the reconstructed current picture.

A blocks motion estimator circuit 11 containing a hierarchical motion estimator receives the information relating to the decoded or reconstructed picture memorized by the picture memory 10 and the information relating to the current macroblock to be coded of the source picture from the pre-analysis circuit 6. The hierarchical motion estimator implements a correlation calculation between this current macroblock and the reconstructed picture according to a known principle, to provide the motion vectors by macroblock. These vectors are transmitted to the coding mode decision circuit 13. This circuit also receives, from the pre-analysis circuit, motion vectors calculated by the pel-recursive type motion estimator. It selects the best macroblock partition with their corresponding coding modes.

The coding mode and the corresponding motion vectors are transmitted to a motion compensation circuit 12 which implements the motion compensation of the reference picture or pictures reconstructed to provide a predicted picture block. The motion vectors are also transmitted to the entropic coding circuit 3 for their coding and transmission to the decoder.

In a more detailed manner, at the input of the encoder there is a pre-analysis circuit 3 containing a resolution reduction circuit, a pel-recursive type motion estimation circuit and a filtering circuit. These circuits enable noise reduction on the picture to be implemented before it is coded. In this field, it is recognized that a pel-recursive type motion estimation is more adapted to noise reduction than to a motion estimation by blocks. It is thus this type of algorithm that is implemented in this pre-analysis phase of the encoder.

The source pictures of the sequence received at the input of the encoder are sub-sampled by the pre-analysis circuit to provide pictures of lower resolution. The pel-recursive type motion estimation is implemented by this pre-analysis circuit, prior to the actual encoding of pictures. It is thus calculated by pixel, on a picture of lower resolution whose size is divided in two horizontally and vertically in our example. This estimation can also provide, in advance, a certain amount of information useful for the encoding module, such as detection of areas in motion, unpredictable areas, preferred prediction direction, etc.

A motion compensated filtering action, based on this motion estimation, is then implemented on full resolution pictures; This filtering reduces the noise of the picture and thus improves the encoder efficiency

The pre-analysis circuit may be used to define the GOP structure of the sequence to be coded, i.e. the type of pictures, inter or intra, reference pictures, bi-directional, etc. This term GOP is the acronym for "Group Of Pictures" and is defined in the MPEG standard.

The pre-analysis is carried out on a pre-defined number of pictures. The delay period between the pre-analysis and the actual picture coding can be in the order of the group of pictures considered for the bit rate control. It corresponds for example to one or several GOPs for the MPEG standard.

In our example, the motion estimation circuit 11 is based on a hierarchical structure and on a block matching approach. The current macroblock is compared to the decoded picture, constructed according to a pyramid of increasing resolution, beginning at the lowest resolution of the pyramid, and of the macroblock, to the highest resolution level. The motion vector fields are estimated for each resolution level, from the lowest level to the highest, the estimations implemented at one level can be used as a prediction for the higher level. The pyramids depend on the different coding modes of the coding circuit. Hence, there are pyramids for the frames, for the fields, and this, for a given reference picture. In the multiple reference approach, this number is thus multiplied.

This filtering circuit 9, in the coding loop, realizes a filtering of the reconstructed picture to reduce the effects of the blocks. It is this filtered picture that is memorized in the picture memory 10.

The pre-analysis circuit 6 is connected to the bit rate control circuit 5 to provide it with GOP structure information and coding cost information by picture type to simplify bit rate control which can thus integrate information ex post facto. The pre-analysis circuit determines, for example, at a first pass in intra mode, the complexity of the pictures, in terms of coding and transmits a coding cost estimation by picture type to the control circuit so that the latter may calculate a quantization step for the DCT + Q circuit.

As indicated above, the coding mode decision circuit 13 selects the best macroblock partition and the macroblock coding mode.

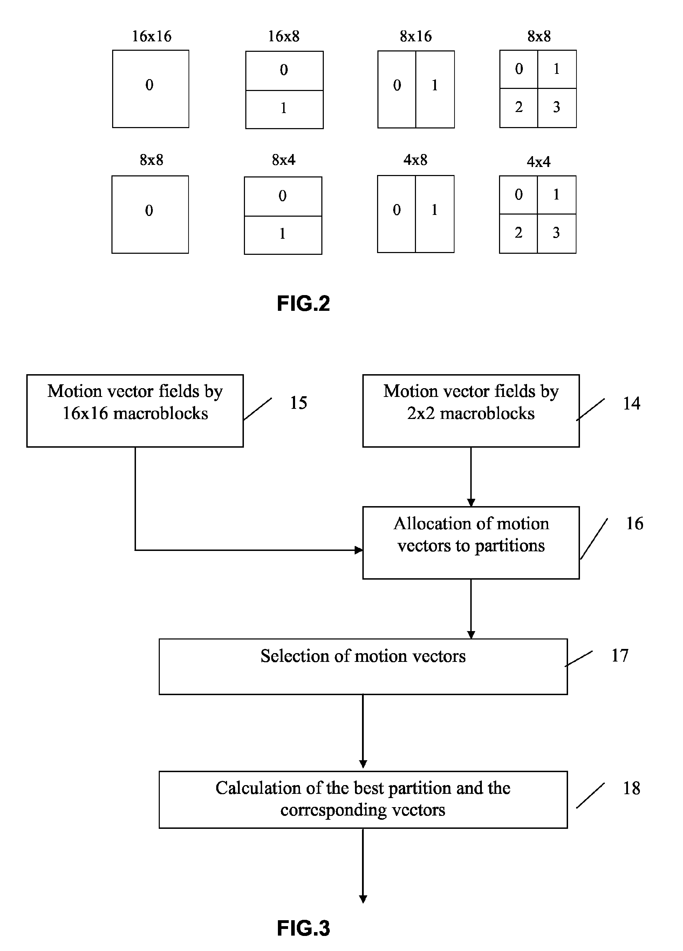

Figure 2 represents different types of a division macroblock of 16 lines of 16 samples, for an encoder using the MPEG 4 standard section 10.

The first line corresponds to a horizontal and vertical cut of a 16x16 sized macroblock respectively into two sub-macroblocks sized 16x8 and 8x16 and a cut into four 8x8 sized sub-macroblocks. The second line corresponds to these same cuts but at a lower level, for a 8x8 sized sub-macroblock.

The pel-recursive motion estimation is implemented on a picture of lower resolution, for example two times lower horizontally and vertically than the source picture.

The block matching motion estimation circuit 11 is of the MPEG2 type, namely that the size of the luminance macroblocks processed is of 16 lines of 16 samples. The internal organisation of macroblocks differs according to the type of picture, field or frame. Hence, it may be luminance macroblocks in two field DCT picture coding or single field DCT picture coding, a macroblock, in this latter case, being constituted by an upper 16x8 block for the odd field and a lower 16x8 block for the even field. The motion vectors calculated depend on the type of coded picture, P predictive or B bi-directional coding picture. These are "forward vectors" (in the MPEG2 standard) and "backward vectors".

Figure 3 represents a coding mode decision flow diagram implemented by the coding mode decision circuit 13.

The motion vectors field by 2x2 blocks is received from the pre-analysis circuit 6, stage 14.

The motion vectors field by 16x16 macroblocks is received from the motion estimation circuit 11, stage 15.

Stage 16 processes the motion vectors of the vector fields for stage 14 and stage 15. It allocates the motion vectors to different possible macroblock partitions.

In the example, the possible partitions are restricted to the sub-block, namely to an 8x8 block, sub-blocks not being partitioned.

In the first phase, the motion vectors are linked to the blocks.

Hence, for a considered sub-block, the motion vectors of the 16x16 macroblock comprising this sub-macroblock in addition to the motion vectors of the 2x2 blocks included in this sub-macroblock are linked to the sub-macroblock.

In a second phase, the motion vectors are allocated to the sub-macroblock.

Different allocation modes are possible:

For example, it may simply be the allocation of all motion vectors linked to the sub-macroblock.

The number of vectors allocated may also be restricted, by applying a pre-selection among the motion vectors of the 2x2 blocks linked to the sub-macroblock, by choosing the median values of the components of these vectors or by choosing the one providing the best correlation by SAD or Hadamart calculations.

Stage 17 receives the vectors allocated to the sub-macroblocks of the different partitions and coming from stage 16. A selection of motion vectors is implemented by realising, for each sub-macro-block, a correlation calculation based on the motion vector(s) allocated and by choosing the motion vector providing the best correlation.

Stage 18 receives the selected vectors allocated to the sub-macroblocks of the partitions. This stage implements a selection of the best partition by realising, for each of the possible partitions, a correlation calculation for the whole macroblock, by carrying out the sum of the correlations of each of the sub-macroblocks constituting the macroblock, based on the motion vectors allocated to the sub-macroblocks corresponding to this partition.

The partition providing the best correlation rate is chosen.

The previous stages are implemented for each of the modes to be tested, predictive mode with a motion vector and a reference picture or bi-predictive with two motion vectors and two reference pictures.

The coding mode decision, intra, predictive inter, bi-predictive inter, etc. for the selected partition, is taken by comparing the corresponding coding costs.

According to a variant of the invention, the motion vectors calculated by the pel-recursive motion estimator of the pre-analysis circuit 6 are transmitted to the hierarchical motion estimator 11 to be used as predictors. The predictor or predictors chosen are used, in a known manner, to position one or more search windows in which the correlations are implemented to determine the motion vector. If several motion vectors correspond to the block processed by the motion estimator 11, the predictors for this block are for example each of these vectors, an average of the components of these vectors or the median values.

According to a variant of the invention, the pre-analysis circuit performs correlation calculations to provide picture/field coding decision information to the motion estimation circuit 11. It realises a pre-selection of the field or frame mode, which it transmits to the motion estimation circuit to simplify the calculations realised by this circuit.

According to an additional variant of the invention, the pre-analysis circuit implements correlation calculations to provide decision information for picture/field coding to the coding mode decision circuit 13, for example a pre-selection of field or frame mode. This circuit thus eliminates, among the motion vectors received, those corresponding to the modes not selected by the pre-analysis circuit. The calculations of the best partition are performed only for the pre-selected modes.

These are embodiments. Of course, the invention applies to all macroblock partitioning, for the parts for which correlation calculations are performed.

The motion estimators can also be of another type than pel-recursive or hierarchical without leaving the field of the invention.

The applications concern video data compression for transmission or recording.

## Claims

1. Method for coding a sequence of source pictures comprising a pre-analysis phase (6) with pel-recursive type motion estimation and an actual coding phase with block matching motion estimation (11) for picture blocks comprising of one or more sub-blocks, **characterized in that** the coding phase also comprises
- a selection stage (16, 17) of motion vectors for the picture sub-blocks based on motion vectors calculated by matching for the block containing the sub-block and based on the motion vectors calculated by the pel-recursive type estimation for the pixels or the pixel groups belonging to the sub-block,
- and a calculation stage (18) of the best partition of a picture block into sub-blocks based on the correlation calculations taking into account the motion vectors selected from the sub-blocks constituting a block.

2. Method according to claim 1, **characterized in that** the selection stage (17) calculates the correlation levels of the sub-blocks for the pel-recursive type motion vectors corresponding to these sub-blocks, the motion vectors obtained by block matching being selected automatically.

3. Method according to claim 2, **characterized in that** the size of the pre-defined blocks correspond to the blocks in the MPEG2 standard and **in that** the lower sizes correspond to the sizes available in the MPEG 4 standard.

4. Method according to claim 1, **characterized in that** the size of the picture blocks is that defined in the MPEG2 standard and **in that** the size of the sub-blocks are those available in the MPEG 4 standard.

5. Method according to claim 1, **characterized in that** the block matching motion estimator is of hierarchical type.

6. Method according to claim 1, **characterized in that** the pre-analysis phase includes a pel-recursive type motion estimation stage between the current picture and the previous picture, for the same resolution or for a lower resolution and a noise reduction stage by motion-compensated filtering based on motion calculated by the said motion estimation.

7. Method according to claim 1, **characterized in that** the pre-analysis phase also implements correlation calculations for the different fields of the current picture to determine, for each block to be coded and for a reference picture, the corresponding field or frame to use according to the best correlation and transmits this information to the block matching type motion estimation circuit (11) to carry out this estimation on the corresponding reference picture.

8. Coding device for the implementation of the process of claim 1, comprising a pre-analysis circuit (6) with a pel-recursive type motion estimator and an actual coding circuit comprising a block matching motion estimator (11) for picture blocks constituted by one or more sub-blocks, **characterized in that** the coding circuit also contains a coding mode decision circuit (12).
- for the selection (16, 17) of motion vectors for the picture sub-blocks, based on the motion vectors calculated by the block motion estimator and relating to the block containing the sub-block and based on the motion vectors calculated by the pel-recursive type estimator (6) and relating to the pixels or pixel groups belonging to the sub-block,
- and for the calculation (18) of the best partition of a picture block into sub-blocks based on the correlation calculations taking into account the motion vectors selected from the sub-blocks constituting a block.
